# EUROPEAN PATENT SPECIFICATION

(11) **EP 3 388 696 B1**
(45) Date of publication and mention of the grant of the patent: **01.12.2021**
(21) Application number: 17305442.0
(22) Date of filing: 13.04.2017
(51) Int. Cl.: F16B 31/02, H01R 4/36, F16B 1/00, F16B 33/02

(54) **SHEARABLE SCREW FOR A WIRE CONNECTION ASSEMBLY AND WIRE CONNECTION ASSEMBLY**
ABREISSSCHRAUBE FÜR EINE DRAHTVERBINDUNGSANORDNUNG UND DRAHTVERBINDUNGSANORDNUNG
VIS FRANGIBLE POUR UN ENSEMBLE DE CONNEXION DE FIL ET ENSEMBLE DE CONNEXION DE FIL

(43) Date of publication of application: 17.10.2018
(73) Proprietor: Tyco Electronics SIMEL, 21220 Gevrey-Chambertin (FR)
(72) Inventor: PELTIER, Bruno, 21850 St. Apollinaire (FR); DOSSMANN, Julien, 21220 Gevrey-Chambertin (FR); PETRIGNET, Laurent, 21220 Gevrey-Chambertin (FR)
(74) Representative: Grünecker Patent- und Rechtsanwälte PartG mbB

(56) References cited:
- EP-A1- 1 460 278
- WO-A1-03/067102
- GB-A- 2 299 640

## Description

The invention relates to a shearable screw for a wire connection assembly, such as a spliced connector or a lug, comprising, along an axial direction of the screw, a driving section, a threaded section with an outer screw thread for being engaged with a corresponding thread of a connector body of the wire connection assembly, and with a contact section for establishing electrical contact with a stranded wire, the screw having a predefined shear torque,wherein at least in the threaded section, the predefined shear torque of the screw varies in the axial direction of the screw, and wherein the screw further comprises at least one breaking line which extends in the material of the screw at least in the threaded section, the course of the at least one breaking line differing from the at least one screw thread. The invention further relates to a wire connection assembly for stranded wires, the assembly comprising a connector body with at least one wire receiving chamber and at least one bore for a shearable screw, the bore being internally threaded and being opened into the wire receiving chamber, further comprising at least one shearable screw for the at least one bore.

The document EP1460278 describes a screw has a head region with a tool-engagement surface, and a threaded region with an outer thread and a hole. The thickness of the wall formed between the hole and the outer thread continuously increases from the end furthest from the head region to the end proximate the head region, at least over part of the axial extent. Furthermore, circular grooves concentric to the longitudinal axis can be added in the hole. Instead of the spaced-apart and separated grooves, a single-start or multiple-start cylindrical or conical thread can also be introduced into the wall, the pitch and/or direction of rotation of which is preferably different from the external thread of the shear bolt. GB2299640 describes an electrical connector comprising first and second connector parts between which an electrical conductor may be received, and a threaded fastener engageable with a threaded bore in the first connector part such that the fastener may engage the conductor, either directly or through an intermediate component, and secure the conductor against the second connector part, the fastener having a threaded shank adapted for engagement with a threaded bore and a head portion, the fastener having drive formations for engagement with a drive tool, including drive formations on the head portion, the shank being formed with axially separated weakenings defining a series of shear planes, whereby said drive formations are formed such that, in use, a series of said weakenings are incapable of being supported by the drive tool, and the weakenings in said series are formed such that the applied torque necessary to cause the shank to shear increases progressively from the shear plane furthest from the head portion to the shear plane nearest the head portion.

Shearable screws and wire connection assemblies are known from the prior art. They are usually used when stranded wires in power distribution networks or long distance power transmission systems have to be connected or spliced. The wire connection assemblies generally comprise a wire receiving chamber, in which a stranded wire can be inserted. At least one shearable screw is inserted in a bore which extends perpendicular to the stranded wire in a connector body of the wire connection assembly. Insertion of the screw into the wire receiving chamber leads to a compression of the wire in the chamber and therefore to an electrical contact between inner walls of the receiving chamber, the stranded wire and the screw. Further, the stranded wire is fixated in the wire receiving chamber so that a solid connection can be established. At least the driving section of the screw shears off when a predefined shear torque of the screw is exceeded. Shearable screws are often designed such that only the driving section shears off when the predefined shear torque is exceeded.

A drawback of the known screws and assemblies is that a screw may only be used in a wire connection assembly with a wire receiving chamber that has a predefined diameter and for a very limited range of thicknesses of the stranded wires. If, for example a shearable screw which is designed for fixating a stranded wire that basically completely fills the wire receiving chamber is used for fixating a stranded wire that only partially fills said chamber, the screw enters deeper into the wire receiving chamber which may prevent shearing off of the screw. Or, on the other hand, if a screw, which is designed for fixating a stranded wire which only partially fills the chamber, is used for fixating a wire that fills the chamber to a higher degree, then this screw may shear off such that a large portion of the screw still stands out of the bore. In other words, stranded wires with different diameters need differently designed shearable screws.

It is therefore an object of the present invention to provide a shearable screw and a wire connection assembly as mentioned in the beginning, which overcome these problems and which provide a solution that allows using the same dimensions of a screw for differently sized wire receiving chambers and/or differently sized stranded wires.

For the above-mentioned shearable screw, this object is reached in that the at least one breaking line is formed as helical groove in the outer surface of the screw spiraling around a central axis of the screw. For the above-mentioned wire connection assembly, the object is reached in that at least one shearable screw of the assembly is formed according to the invention.

The solution according to the invention allows using the same type of shearable screw for different stranded wires and/or different wire connection assemblies. Preferably, the screw does not have a single defined shear section at which the screw shears off. Instead, only that portion of the screw shears off which stands out of the bore. In other words, the screw shears off at the end of the inner thread of the bore at the connector body's outer side. This prevents shearing off of the screw at a predefined shearing position of the screw which is not aligned with the outer side of the connector body.

The breakage line helps to avoid remnants of the screw, in particular sharp edges, remaining on the outer side of the connector body after shearing off. Said remnants, in particular sharp edges should be prevented in order to avoid damaging covers which may be applied to the connector body after shearing off. Another reason for avoiding remnants is to reduce the risk of hurting an operator which handles the assembly. The breaking line may allow threads of the screw to easily break when the screw shears off at said thread. The at least one breaking line is formed as helical groove in the material of the screw, the helical groove spiraling around the central axis of the screw. Consequently, the groove forms a line in which the material of the screw is thinner than in the adjacent areas. A helical groove is advantageous in order to avoid sharp edges projecting away from the screw after shearing off. Preferably the handedness of the helical groove is opposite to that of the screw thread. A helical groove in the outer surface of the screw is advantageous for easily forming such a helical groove.

The axial direction of the screw is parallel with a central axis of the same.

In the following, further improvements of the invention are described. The additional improvements may be combined independently of each other, depending on whether a particular advantage of a particular improvement is needed in a specific application.

According to a first advantageous improvement, the shear torque varies continuously along the axial direction of the screw. This prevents formation of weak areas where the screw shears off instead of shearing off at the end of the bore.

In a preferred embodiment, the predefined shear torque of the screw decreases along the axial direction of the screw towards the contact section. In particular, the predefined shear torque of the screw continuously decreases in the axial direction of the screw over the majority of a length of the screw in the axial direction. This feature ensures that the screw will always shear off at the end of the bore on the outer side of the connector body. If the screw is inserted in the bore and pressed against a stranded wire, the part of the screw which is close to the thread of the bore but which is not inserted in the bore will always have a lower shear torque then the regions which are further away from the bore. Consequently, this region is the weakest region of the screw and the screw will shear off in this region.

A preferred embodiment of the screw which enables the aforementioned variation of the shear torque has, at least in the threaded section, the overall shape of a cylinder barrel, wherein a wall thickness of the cylinder barrel varies along the axial direction of the screw. In particular, the wall thickness continuously varies along the axial direction. Preferably, the wall thickness continuously increases or decreases.

In a particularly preferred embodiment of the screw which enables the variation of the shear torque, the wall thickness of the cylinder barrel decreases along the axial direction of the screw towards the contact section. Thereby, the region of the screw which is close to the bore but not engaged with the inner thread of the bore is the weakest region of the screw. Consequently, the screw will shear off in this region when an applied torque on the driving section exceeds the shear torque of the screw in this region. The varying wall thickness may form a cone shaped cavity in the interior of the screw. Consequently, the broadest part of the cone is close to the contact section and the cone tapers towards the driving section.

A preferred variation of the wall thickness is formed by an inner side of the wall that is inclined towards the central axis of the screw between 0.5° and 3°, more preferably between 0.5° and 1.5° and most preferably between 0.75° and 1.25°.

The varying wall thickness is a preferred way of achieving the variation in the shear torque. However, the variation in the shear torque may also be achieved by other means. A variation in the shear torque may also be achieved with a constant wall thickness or with a shearable screw that is not hollow. Just by way of example, the material of the screw may have a varying composition along the axial direction. Further, the screw may have a varying concentration of voids in the screw's material along the axial direction. Further, the screw may be differently treated, in particular thermally treated, along the axial direction.

A breaking line, in particular a helical groove, may be formed on an inner side of the wall of a screw which has an overall cylindrical shape as described above. A breaking line, in particular a helical groove which is arranged on an inner side of the wall may be advantageous for the case that a continuously formed outer thread on the screw is required.

The screw is provided with at least one breaking line in the outer surface but can also have at least one breaking line on the inner side of the wall.

In this case, the screw is provided with at least one breaking line in the outer surface and at least one breaking line on the inner side of the wall. The breaking line on the inner side of the wall is preferably also formed as a helical groove in the material of the screw.

A bottom of the helical groove may be at the same radial distance to the central axis of the screw or closer to the same as a root of the screw thread. Thereby, a helical groove may easily be formed and an effective breaking line may be achieved.

The wire connection assembly according to the invention may be improved in that the bore is arranged in a depression of the outer side of the connector body. Said depression may house remnants of the sheared off section of the screw after the screw is sheared off. If, for example, a part of a thread of the screw extends out of the bore, said part may be housed in the depression such that it does not stand over the outer side of the connector body.

The depression preferably tapers from the outer side of the connector body towards the bore. In other words, the depression and the bore together form an overall funnel-like shape. The tapered depression may help in guiding the screw towards the bore during insertion.

In the following, the invention and its improvements are described in greater details using exemplary embodiments and with reference to the drawings. As described above, the various features shown in the embodiments may be used independently of each other in specific applications.

In the following figures, elements having the same function and/or the same structure will be referenced by the same reference signs.

In the drawings:
- Fig. 1: shows a schematic perspective view of a preferred embodiment of a wire connection assembly not being part of the claimed invention but present for illustration purpose only with a partially inserted shearable screw not being part of the claimed invention but present for illustration purpose only in a partially cut out view, wherein the screw is shown without its outer thread;
- Fig. 2: shows a schematic perspective view of the shearable screw of Fig. 1;
- Fig. 3: shows the wire connection assembly of Fig. 1 in a state in which the shearable screw is sheared off and partially lifted off of the remaining assembly;
- Fig. 4: shows a second embodiment of the shearable screw according to the invention; and
- Fig. 5: shows a third embodiment of the shearable screw not being part of the claimed invention but present for illustration purpose only.

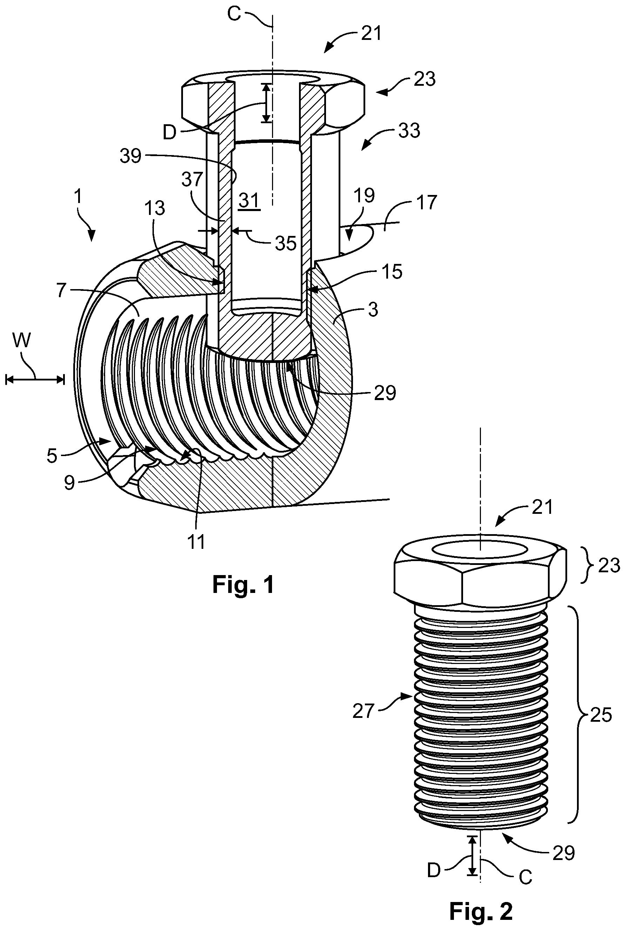

In the following, a preferred embodiment of the wire connection assembly not being part of the claimed invention but present for illustration purpose only and a first embodiment of the shearable screw are described with respect to Figs. 1 and 2. Thereby, Fig. 2 shows the shearable screw as shown in Fig. 1 with its outer thread.

The wire connection assembly 1 comprises a connector body 3 with a wire receiving chamber 5. In the wire receiving chamber 5, at least one stranded wire (not shown) may be inserted to be fixated to the connector body 3. Preferably, the wire receiving chamber 5 extends longitudinally through the connector body 3 along a wire receiving direction W.

In the preferred embodiment, an inner wall 7 of the wire receiving chamber 5 is provided with a plurality of ribs 9 which extend perpendicular to the wire receiving direction W. If a stranded wire is pressed against the ribs 9, then the material of the stranded wire, preferably copper or aluminum, can be deformed and be pressed in the spaces 11 between the ribs 9. Consequently, a stranded wire is kept in the wire receiving chamber 5 and pulling out of the stranded wire is impeded.

The connector body 3 is provided with at least one bore 13. The bore 13 extends perpendicular to the wire receiving direction W from outside of the connector body 3 to the wire receiving chamber 5. The bore 13 is provided with an inner thread on its inner wall 15. The inner wall 15 with its inner thread is arranged such that it is spaced apart from an outer side 17 of the connector body 3. This may be achieved by a depression 19 which is formed in the material of the connector body 3. The depression 19 widens the bore 13 to the outer side 17, but is preferably not threaded. The bore 13 with the depression 19 may together form an overall funnel-like shape when the depression 19 tapers from the outer side 17 towards the bore 13.

The bore 13 with its inner thread is intended for receiving a shearable screw 21. The shearable screw 21 preferably has an overall longitudinal shape extending along an axial direction D of the screw 21 which is parallel to a central axis C of the screw 21.

The screw 21 has a driving section 23 for the application of a tool (not shown). The driving section 23 may have any appropriate shape that enables the engagement with a proper tool for driving the screw 21. Just by way of example, the screw 21 is shown with a driving section 23 that has an overall hexagonal shape for being engaged with a tool such as a wrench.

Along the central axis C, the driving section 23 is followed by a threaded section 25, which is provided with an outer screw thread 27 for being engaged with the thread of the inner wall 15 of the connector body 3. Finally, following the central axis C of the screw 21, the screw 21 is provided with a contact section 29 for establishing electrical contact with a stranded wire.

The contact section 29 may have any appropriate shape depending on the application of the screw 21. In Fig. 1, the screw 21 is shown with a basically flat contact section 29 which is slightly rounded. However, this shape is not mandatory. The basically flat shape is preferable for wires containing mostly copper. If, however, a stranded wire made from aluminum is inserted in the wire receiving chamber 5, a contact section 29 which is shaped as a tip with an overall triangular cross-section may also be applicable.

A predefined shear torque of the screw varies along the axial direction D of the screw 21. Preferably, the predefined shear torque decreases along the axial direction D towards the contact section 29 of the screw 21.

The screw 21 has an overall shape of a cylinder barrel 33, at least in the threaded section 25. Consequently, the screw 21 has a hollow interior 31. A preferred way of providing the screw 21 with a varying shear torque is forming the cylinder barrel 33 with a varying thickness 35 of the cylinder wall 37. Preferably, the wall thickness 35 decreases along the axial direction D towards the contact section 29. By the decreasing wall thickness 35, the interior 31 has an overall conical shape which tapers from the contact section 29 towards the driving section 23.

Preferably, the inner side 39 of the wall 37 is inclined between 0.5° and 3° towards the central axis C, more preferably between 0.5° and 1.5°, most preferably between 0.75° and 1.25°.

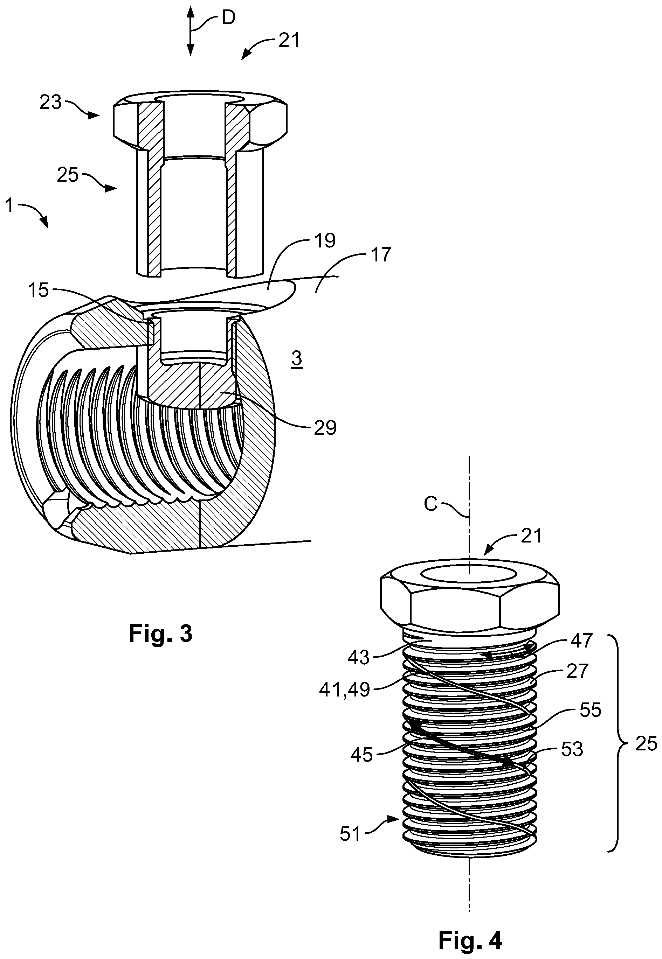

In Fig. 3, the function of the shearable screw 21 and the wire connection assembly 1 is shown. For a better visibility, the assembly 1 is shown without an inserted wire.

When the screw 21 is pressed against an inserted wire, the driving section 23 and a part of the threaded section 25 will shear off when a torque which is applied on the screw 21 exceeds the predefined shear torque of the screw 21. Since the predefined shear torque of the screw 21 preferably decreases towards the contact section 29, the screw 21 will always shear off at the end of the inner wall 15 of the bore 13 which is arranged closer to the outer side 17.

If a part of the screw thread 27 extends from the part of the screw 21 which remains in the bore 13, then this part may be housed in the depression 19 of the connector body 3 such that the risk of damages being caused by said part is the reduced.

A second preferred embodiment of a screw 21 according to the invention is shown in Fig. 4. The second embodiment of the screw 21 is basically similar to the first embodiment as described with respect to Figs. 1 to 3. For the sake of brevity, only the difference of the second embodiment with respect to the first embodiment is described.

The screw 21 comprises a breaking line 41. The breaking line 41 extends in the material 43 of the screw 21, preferably only in the threaded section 25. The breaking line forms a region of decreased material stability. This may help single threads to easily break off when the screw 21 shears off. This may reduce the risk of single parts, especially remnants of the screw thread 27 standing out of the bore 13 after the screw 21 has been sheared off.

The course 45 of the breaking line 41 differs from the course 47 of the screw thread 27. In particular, the breaking line 41 is preferably formed as a helical groove 49 in the material 43 of the screw 21. More preferably, the breaking line 41 is formed as a helical groove 49 in the outer surface 51 of the screw 21. Consequently, the helical groove 49 cuts through the outer screw thread 27 of the screw 21. The helical groove 49 spirals around the central axis C of the screw 21. Thereby, the handedness of the helical groove 49 is preferably opposite to the handedness of the screw thread 27. The lead of the helical groove 49 is preferably larger than that of the outer screw thread 27.

A bottom 53 of the helical groove 49, which is defined by the portion of the helical groove 49 which is arranged deepest in the material 43 of the screw 21, is preferably arranged at the same distance to the central axis C as the root 55 of the outer screw thread 27. In other optional embodiments, the bottom 53 may also be arranged deeper in the material 43 then the root 55 of the thread or may be arranged further away from the central axis C.

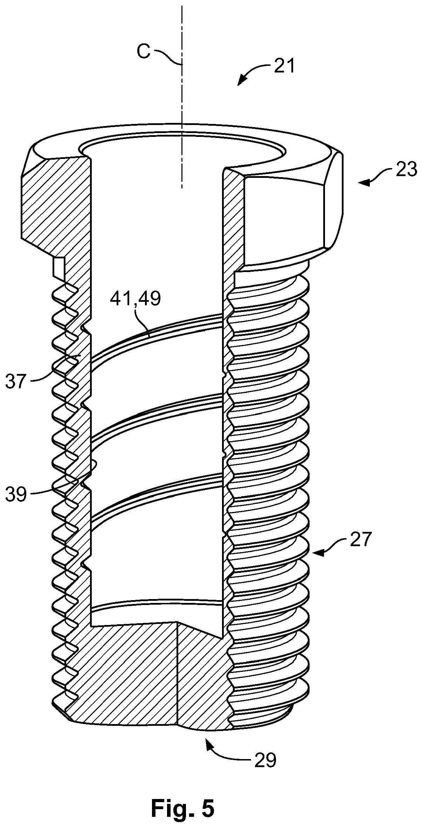

A third preferred embodiment of a screw 21 not being part of the claimed invention but present for illustration purpose only is shown in Fig. 5. The third embodiment of the screw 21 is basically similar to the first and second embodiments as described with respect to Figs. 1 to 4. For the sake of brevity, only the differences of the third embodiment to the aforementioned embodiments are described.

The screw 21 is provided with a breaking line 41 which is formed as a helical groove 49. However, in contrast to the second embodiment of the screw 21 as described with respect to Fig. 4, the breaking line 41 is not arranged in the outer surface 51 of the screw 21, but in the inner side 39 of the wall 37. Thereby, the groove 49 extends into the wall 37, spiraling around the central axis C. Preferably, the cross section of the groove 49 tapers from the inner side 39 towards the outer screw thread 27.

The handedness of the helical groove 49 is preferably opposite to the handedness of the outer screw thread 27. However, the handedness may also be the same. In both cases, the lead of the helical groove 49 preferably differs from the lead of the outer screw thread 27. In particular, the lead of the helical groove 49 is preferably larger than that of the outer screw thread 27.

### REFERENCE SIGNS

- 1: wire connection assembly
- 3: connector body
- 5: wire receiving chamber
- 7: inner wall
- 9: ribs
- 11: space
- 13: bore
- 15: inner wall
- 17: outer side
- 19: depression
- 21: shearable screw
- 23: driving section
- 25: threaded section
- 27: outer screw thread
- 29: contact section
- 31: hollow interior
- 33: cylinder barrel
- 35: thickness
- 37: wall
- 39: inner side
- 41: breaking line
- 43: material
- 45: course of the breaking line
- 47: course of the screw thread
- 49: helical groove
- 51: outer surface of the screw
- 53: bottom of the helical groove
- 55: root of the screw thread

- C: central axis
- D: axial direction
- W: wire receiving direction

## Claims

1. Shearable screw (21) for a wire connection assembly (1), such as a spliced connector or a lug, comprising, along an axial direction (D) of the screw (21), a driving section (23), a threaded section (25) with an outer screw thread (27) for being engaged with a corresponding thread of a connector body (3) of the wire connection assembly (1), and with a contact section (29) for establishing electrical contact with a stranded wire, the screw (21) having a predefined shear torque, wherein at least in the threaded section (25), the predefined shear torque of the screw (21) varies in the axial direction (D) of the screw (21), and wherein the screw (21) further comprises at least one breaking line (41) which extends in the material (43) of the screw (21) at least in the threaded section (25), the course (45) of the at least one breaking line (41) differing from the course (47) of at least one outer screw thread (27), **characterized in that** the at least one breaking line (41) is formed as helical groove (49) in the outer surface (51) of the screw (21) spiraling around a central axis (C) of the screw (21).

2. Shearable screw according to claim 1, **characterized in that** the predefined shear torque of the screw (21) decreases along the axial direction (D) of the screw (21) towards the contact section (29).

3. Shearable screw (21) according to claim 1 or 2, **characterized in that** the screw (21) has, at least in the threaded section (25), the overall shape of a cylinder barrel (33), wherein a wall thickness (35) of the cylinder barrel (33) varies along axial direction (D) of the screw (21).

4. Shearable screw (21) according to claim 3, **characterized in that** the wall thickness (35) of the cylinder barrel (33) decreases along the axial direction (D) of the screw (21) towards the contact section (29).

5. Shearable screw (21) according to claim 3 or 4, **characterized in that** the cross section of the groove (49) tapers from the inner side (39) towards the outer screw thread (27).

6. Shearable screw (21) according to any of claims 1 to 5, **characterized in that** a bottom (53) of the helical groove (49), which is defined by the portion of the helical groove (49) which is arranged deepest in the material (43) of the screw (21) is arranged deeper in the material (43) than a root (55) of the thread (27).

7. Shearable screw (21) according to any of claims 1 to 6, **characterized in that** a bottom (53) of the helical groove (49) is at the same radial distance to the central axis (C) of the screw (21) or closer to the central axis (C) as a root (55) of the screw thread (27).

8. Shearable screw (21) according to any of claims 1 to 7, **characterized in that** at least one breaking line (41) is formed as helical groove (49) which extends in an inner side (39) of a wall (37) of the screw (21).

9. Shearable screw (21) according to any of claims 1 to 8, **characterized in that** the handedness of the helical groove (49) is opposite to that of the screw thread (27).

10. Wire connection assembly (1) for stranded wires, the assembly (1) comprising a connector body (3) with at least one wire receiving chamber (5) and at least one bore (13) for a shearable screw (21), the bore (13) being internally threaded and being opened into the wire receiving chamber (5), further comprising at least one shearable screw (21) for the at least one bore (13), **characterized in that** the at least one shearable screw (21) is formed according to one of the claims 1 to 9.

11. Wire connection assembly (1) according to claim 10, **characterized in that** the bore (13) is arranged in a depression (19) of the outer side (17) of the connector body (3).

12. Wire connection assembly (1) according to claim 11, **characterized in that** the depression (19) tapers from the outer side (17) of the connector body (3) towards the bore (13).

## Patentansprüche

1. Abscherbare Schraube (21) für eine Draht-Verbindungsanordnung (1), beispielsweise einen gespleißten Verbinder oder eine Anschlussklemme, die in einer axialen Richtung (D) der Schraube (21) einen Eingriffsabschnitt (23), einen Gewindeabschnitt (25) mit einem Außengewindegang (27), der mit einem entsprechenden Gewindegang eines Verbinder-Körpers (3) der Draht-Verbindungsanordnung (1) in Eingriff gebracht wird, sowie mit einem Kontaktabschnitt (29) zum Herstellen von elektrischem Kontakt mit einem gelitzten Draht umfasst, wobei die Schraube (21) ein vorgegebenes Schermoment hat, wenigstens in dem Gewindeabschnitt (25), das vorgegebene Schermoment der Schraube (21) in der axialen Richtung (D) der Schraube (21) variiert und die Schraube (21) des Weiteren wenigstens eine Bruchlinie (41) umfasst, die wenigstens in dem Gewindeabschnitt (25) in dem Material (43) der Schraube (21) verläuft, wobei sich der Verlauf (45) der wenigstens einen Bruchlinie (41) von dem Verlauf (47) wenigstens eines Außengewindegangs (27) unterscheidet, **dadurch gekennzeichnet, dass** die wenigstens eine Bruchlinie (41) als Spiralnut (49) in der Außenfläche (51) der Schraube (21) ausgebildet ist, die spiralförmig um eine Mittelachse (C) der Schraube (21) herum verläuft.

2. Abscherbare Schraube nach Anspruch 1, **dadurch gekennzeichnet, dass** das vorgegebene Schermoment der Schraube (21) in der axialen Richtung (D) der Schraube (21) auf den Kontaktabschnitt (29) zu abnimmt.

3. Abscherbare Schraube (21) nach Anspruch 1 oder 2, **dadurch gekennzeichnet, dass** die Schraube (21) wenigstens in dem Gewindeabschnitt (25) die Gesamtform eines Zylinderrohrs (33) hat, wobei eine Wanddicke (35) des Zylinderrohrs (33) in axialer Richtung (D) der Schraube (21) variiert.

4. Abscherbare Schraube (21) nach Anspruch 3, **dadurch gekennzeichnet, dass** die Wanddicke (35) des Zylinderrohrs (33) in der axialen Richtung (D) der Schraube (21) auf den Kontaktabschnitt (29) zu abnimmt.

5. Abscherbare Schraube (21) nach Anspruch 3 oder 4, **dadurch gekennzeichnet, dass** sich der Querschnitt der Nut (49) von der Innenseite (39) auf den Außengewindegang (27) zu verjüngt.

6. Abscherbare Schraube (21) nach einem der Ansprüche 1 bis 5, **dadurch gekennzeichnet, dass** ein Boden (53) der Spiralnut (49), der durch den Abschnitt der Spiralnut (49) gebildet wird, der am tiefsten in dem Material (43) der Schraube (21) angeordnet ist, tiefer in dem Material (43) angeordnet ist als ein Grund (55) des Gewindegangs (27).

7. Abscherbare Schraube (21) nach einem der Ansprüche 1 bis 6, **dadurch gekennzeichnet, dass** sich ein Boden (53) der Spiralnut (49) in dem gleichen radialen Abstand zu der Mittelachse (C) der Schraube (21) oder näher an der Mittelachse (C) befindet als ein Grund (55) des Gewindegangs (27).

8. Abscherbare Schraube (21) nach einem der Ansprüche 1 bis 7, **dadurch gekennzeichnet, dass** wenigstens eine Bruchlinie (41) als Spiralnut (49) ausgebildet ist, die in einer Innenseite (39) einer Wand (37) der Schraube (21) verläuft.

9. Abscherbare Schraube (21) nach einem der Ansprüche 1 bis 8, **dadurch gekennzeichnet, dass** die Richtung der Spiralnut (49) entgegengesetzt zu der des Gewindegangs (27) ist.

10. Draht-Verbindungsanordnung (1) für gelitzte Drähte, wobei die Anordnung (1) einen Verbinder-Körper (3) mit wenigstens einer Draht-Aufnahmekammer (5) und wenigstens einer Bohrung (13) für eine abscherbare Schraube (21) umfasst, wobei die Bohrung (13) mit Innengewinde versehen ist und sich in die Draht-Aufnahmekammer (5) hinein öffnet, und sie des Weiteren wenigstens eine abscherbare Schraube (21) für die wenigstens eine Bohrung (13) umfasst, **dadurch gekennzeichnet, dass** die wenigstens eine abscherbare Schraube (21) gemäß einem der Ansprüche 1 bis 9 ausgebildet ist.

11. Draht-Verbindungsanordnung (1) nach Anspruch 10, **dadurch gekennzeichnet, dass** die Bohrung (13) in einer Vertiefung (19) der Außenseite (17) des Verbinder-Körpers (3) angeordnet ist.

12. Draht-Verbindungsanordnung (1) nach Anspruch 11, **dadurch gekennzeichnet, dass** sich die Vertiefung (19) von der Außenseite (17) des Verbinder-Körpers (3) zu der Bohrung (13) hin verjüngt.

## Revendications

1. Vis frangible (21) pour un ensemble de connexion de fil (1), tel qu'un connecteur épissé ou une cosse, comprenant, en direction axiale (D) de la vis (21), une section d'actionnement (23), une section filetée (25) avec un filetage de vis externe (27) destiné à s'engager avec un filetage correspondant d'un corps de connecteur (3) de l'ensemble de connexion de fil (1), et avec une section de contact (29) pour établir un contact électrique avec un fil multibrin, la vis (21) ayant un couple de cisaillement prédéfini, dans laquelle, au moins dans la section filetée (25), le couple de cisaillement prédéfini de la vis (21) varie en direction axiale (D) de la vis (21), et dans laquelle la vis (21) comprend en outre au moins une ligne de rupture (41) qui s'étend dans le matériau (43) de la vis (21) au moins dans la section filetée (25), la trajectoire (45) de ladite au moins une ligne de rupture (41) différant de la trajectoire (47) d'au moins un filetage de vis externe (27), **caractérisée en ce que** ladite au moins une ligne de rupture (41) est formée comme une rainure hélicoïdale (49) dans la surface externe (51) de la vis (21) qui s'enroule en spirale autour d'un axe central (C) de la vis (21).

2. Vis frangible selon la revendication 1, **caractérisée en ce que** le couple de cisaillement prédéfini de la vis (21) diminue en direction axiale (D) de la vis (21) vers la section de contact (29).

3. Vis frangible (21) selon la revendication 1 ou 2, **caractérisée en ce que** la vis (21) présente, au moins dans la section filetée (25), la forme générale d'un barillet cylindrique (33), dans laquelle l'épaisseur de paroi (35) du barillet cylindrique (33) varie en direction axiale (D) de la vis (21).

4. Vis frangible (21) selon la revendication 3, **caractérisée en ce que** l'épaisseur de paroi (35) du barillet cylindrique (33) diminue en direction axiale (D) de la vis (21) vers la section de contact (29).

5. Vis frangible (21) selon la revendication 3 ou 4, **caractérisée en ce que** la section transversale de la rainure (49) diminue du côté interne (39) vers le filetage de vis externe (27).

6. Vis frangible (21) selon l'une quelconque des revendications 1 à 5, **caractérisée en ce que** le fond (53) de la rainure hélicoïdale (49), qui est défini par la portion de la rainure hélicoïdale (49) qui est agencée au plus profond du matériau (43) de la vis (21), est agencé plus profondément dans le matériau (43) que la base (55) du filetage (27).

7. Vis frangible (21) selon l'une quelconque des revendications 1 à 6, **caractérisée en ce que** le fond (53) de la rainure hélicoïdale (49) se trouve à la même distance radiale de l'axe central (C) de la vis (21) ou est plus proche de l'axe central (C) que la base (55) du filetage de vis (27).

8. Vis frangible (21) selon l'une quelconque des revendications 1 à 7, **caractérisée en ce qu'**au moins une ligne de rupture (41) est formée comme une rainure hélicoïdale (49) qui s'étend dans un côté interne (39) d'une paroi (37) de la vis (21).

9. Vis frangible (21) selon l'une quelconque des revendications 1 à 8, **caractérisée en ce que** le sens du filetage de la rainure hélicoïdale (49) est opposé à celui du filetage de vis (27).

10. Ensemble de connexion de fil (1) pour fils multibrin, l'ensemble (1) comprenant un corps de connecteur (3) avec au moins une chambre de réception de fil (5) et au moins un trou (13) pour une vis frangible (21), le trou (13) comportant un filetage interne et étant ouvert dans la chambre de réception de fil (5), et comprenant en outre au moins une vis frangible (21) pour ledit au moins un trou (13), **caractérisé en ce que** ladite au moins une vis frangible (21) est conformée selon l'une des revendications 1 à 9.

11. Ensemble de connexion de fil (1) selon la revendication 10, **caractérisé en ce que** le trou (13) est agencé dans une dépression (19) du côté externe (17) du corps de connecteur (3).

12. Ensemble de connexion de fil (1) selon la revendication 11, **caractérisé en ce que** la dépression (19) se réduit du côté externe (17) du corps de connecteur (3) vers le trou (13).
